# EUROPÄISCHE PATENTANMELDUNG

(11) **EP 4 234 108 A2**
(43) Veröffentlichungstag der Anmeldung: **30.08.2023**
(21) Anmeldenummer: 23174362.6
(22) Anmeldetag: 15.03.2021
(51) Int. Cl.: B07B 1/54

(54) **VERFAHREN UND SYSTEM ZUR SEPARATION VON STAUBHALTIGEN MATERIALGEMISCHEN AUS DER VERWERTUNG VON ELEKTRO- ODER ELEKTRONIKGERÄTEN**

(30) Priorität: 25.03.2020 DE 102020108204
(62) Teilanmeldung aus: 21716966.3
(71) Anmelder: Schons, Georg, 78253 Eigeltingen (DE)
(72) Erfinder: Schons, Marc, 78253 Eigeltingen (DE); Schons, Georg, 78253 Eigeltingen (DE); Reske, Henrik, 78253 Eigeltingen (DE)
(74) Vertreter: Patent- und Rechtsanwälte Behrmann Wagner PartG mbB

(57) **Zusammenfassung**

Die Erfindung betrifft ein Verfahren und ein System zur Separation von faserhaltigen, bevorzugt glasfaserhaltigen, Schwermetall (SM) und/oder Edelmetall (EM) aufweisenden, staubhaltigen Materialgemischen aus der Verwertung von Elektro- oder Elektronikgeräten, umfassend zumindest einen Verfahrensschritt (S1) zum mechanischen und trockenen Lösen von Partikeln aus faserhaltigen Mischmaterialagglomeraten und zumindest einen Verfahrensschritt (S2) zum mechanischen und trockenen Auflösen von faserhaltigen Mischmaterialagglomeraten.

## Beschreibung

Die vorliegende Erfindung betrifft ein Verfahren zur Separation von faserhaltigen, bevorzugt glasfaserhaltigen, Schwermetall (SM) und/oder Edelmetall (EM) aufweisenden, staubhaltigen Materialgemischen aus der Verwertung von Elektro- oder Elektronikgeräten. Ferner umfasst die vorliegende Erfindung ein System zur Separation von faserhaltigen, bevorzugt glasfaserhaltigen, Schwermetall (SM) und/oder Edelmetall (EM) aufweisenden, staubhaltigen Materialgemischen aus der Verwertung von Elektro- oder Elektronikgeräten.

In der Verwertung von Elektro- oder Elektronikgeräten werden in an sich bekannter Art und Weise Zerlegungsschritte durchlaufen, die darauf abzielen einerseits gesundheits- oder umweltgefährdende Stoffe sicher zu entsorgen und andererseits werthaltige Rohstoffe, insbesondere Metalle, Edelmetalle und dgl., zurückzugewinnen oder allgemeiner einem Produkt- oder Materialkreislauf zuzuführen.

Bei der Verwertung, insbesondere bei der maschinellen Zerlegung oder Zerkleinerung der Elektro- oder Elektronikgeräte fällt eine nicht unerhebliche Menge eines staubhaltigen Materialgemisches an, welches bisher entweder überhaupt nicht aufbereitet oder weiterverwendet wird und stattdessen überwiegend deponiert wird oder aber ohne wesentliche Aufbereitungsschritte einem Verhüttungsprozess zur Rückgewinnung von Metallen und Edelmetallen zugeführt wird. Bei dem Staub der verhüttet wird ist die jeweils aktuelle und damit variable Zusammensetzung für die Wirtschaftlichkeit verantwortlich. Bei Verhüttungskoten von etwa € 1.000,- pro Tonne Staub kann es, je nach Zusammensetzung des Staubs, zu unterschiedlichen wirtschaftlichen Ergebnissen bis hin zu wirtschaftlichen Verlusten kommen. Für Staub der nicht verhüttet wird, besteht auch keine Kenntnis darüber, wie werthaltig die Staubbestandteile sind, so dass zwar keine Verhüttungskosten anfallen, dafür aber auch potentiell werthaltige staubhaltige Materialien, die nachfolgend auch als "Staub" bezeichnet werden nicht recycelt werden.

Bei dem besagen Staub oder Stäuben handelt es sich um ein Materialgemisch, welches in der Regel 1 Gew.-% bis 5 Gew.-% Partikel mit einer Größe von > 10 mm aufweist und entsprechend 95 Gew.-% bis 99 Gew.-% Partikel mit einer Größe von unter 10 mm aufweist. Der besagte Staub entsteht in der Regel beim Zerkleinern der Elektro- oder Elektronikgeräte mit Schreddern, Prallmühlen, Schneidmühlen, Hammermühlen oder Rotorscheren. Aber auch andere Verfahrensschritte der Verwertung, insbesondere der mechanischen Zerlegung, von Elektro- oder Elektronikgeräten führen zu der Erzeugung oder Generierung des staubhaltigen Materialgemischs oder des Staubs mit der oben angegebenen Grundzusammensetzung.

Wie oben bereits ausgeführt, sind im Stand der Technik keine Verfahren oder Vorrichtungen bekannt, mit denen der Staub wirtschaftlich aufbereitet oder wiederverwendet werden kann. Dadurch gehen, insbesondere in der Form von thermisch verwertetem oder deponiertem Staub jährlich enorme Mengen an Ressourcen, insbesondere auch an Metallen und Edelmetallen für die Wiederverwertung oder Weiterverwertung verloren, die entsprechend mit erheblichem Aufwand durch Primärabbauprozesse oder Primärherstellungsprozesse gewonnen werden müssen, was nicht zuletzt eine im Vergleich zum Recycling größere CO₂-Belastung verursacht.

Das oben beschriebene Ausgangsmaterial unterscheidet sich dabei wesentlich von anderen Ausgangsmaterialien, beispielsweise von Materialien aus einer Altkabelverwertung. Letztgenannte Materialen sind zwar ebenfalls faserhaltig, bilden jedoch makroskopisch eher einen Korn- oder Partikelgemisch mit Faseranteilen. Auch sind bei der Kabelverwertung die potentiell werthaltigen Bestandteile des Ausgangsmaterials selbst in nicht aneinander anhaftenden, verhakenden und verknäuelenden sondern losen Fasern enthalten. Im faserhaltigen Mischmaterial aus der Verwertung von Elektro- oder Elektronikgeräte ist jedoch im Wesentlichen basierend auf den faserverstärkten Leiterplatten (Circuit Boards) eine Art von Fasern enthalten, die nicht werthaltig ist und zudem stark dazu neigt Knäuele auszubilden, bei denen Fasern aneinander haften - sowohl mechanisch als chemisch oder elektrostatisch - und zusätzlich auch weitere Partikel einschließen oder binden. Diese mäßig aber dennoch miteinander verbundenen Gebilde werden nachfolgend als Mischmaterialagglomerate bezeichnet, wobei der Begriff "Agglomerat" als mehr oder weniger verfestigte Anhäufung von ehemals losen Bestandteilen zu einem Verbund verstanden wird, das durch technische Abläufe, nämlich die Verwertung, insbesondere die maschinelle Zerlegung und/oder Zerkleinerung von Elektro- oder Elektronikgeräte, hergestellt wird.

Folglich ist die Technologie, wie sie beispielsweise der DE 40 41 385 A1 zu entnehmen ist gerade nicht geeignet, um ein Verfahren zur Separation von faserhaltigen, bevorzugt glasfaserhaltigen, Schwermetall und/oder Edelmetall aufweisenden, staubhaltigen Materialgemischen aus der Verwertung von Elektro- oder Elektronikgeräten vorzuschlagen, weil die dortigen Vorrichtungen, insbesondere Borstenteppiche oder bürstenähnlichen flächigen Strukturen zur Handhabung von knäuelenden Materialgemischen denkbar ungeeignet sind. Diese würden bei der Beaufschlagung mit Knäueln lediglich zugesetzt oder bedeckt werden, ohne dass zu einem mechanischen und trockenen Auflösen von faserhaltigen Mischmaterialagglomeraten komen würde, selbst wenn die Borstenteppiche oder bürstenähnlichen flächigen Strukturen in Vibration versetzt werden würden. Denn es ist ja gerade vorgesehen und beschrieben, dass die Borsten die Fasern oder Litzen zwischen den Borsten festgehalten werden, was bestehende Knäuele weiter verfestigen und gerade nicht auflösen würde. Mit Bezug zu dem betreffenden Ausgangsmaterial wären überhaupt nur Mischmaterialagglomerate denkbar, bei denen sich Kabelisolierungen oder sonstige Kabelbestandteile nicht von den metallischen Leitern gelöst haben. Diese Agglomerate kann jedoch auch die Lehre der DE 40 41 385 A1 nicht auflösen.

Vor diesem Hintergrund stellt sich die vorliegende Erfindung die Aufgabe ein Verfahren sowie ein System zur Separation von faserhaltigen, bevorzugt glasfaserhaltigen, Schwermetall (SM) und/oder Edelmetall (EM) aufweisenden, staubhaltigen Materialgemischen aus der Verwertung von Elektro- oder Elektronikgeräten vorzuschlagen, welches die Anreicherung von recycelbaren Komponenten, insbesondere Metallen und Edelmetallen, erlaubt und damit die Verwertung des staubhaltigen Materialgemisches oder Staubes insgesamt in einem wirtschaftlichen Rahmen ermöglicht.

Gelöst wird diese Aufgabe durch ein Verfahren mit den Merkmalen des Anspruchs 1. Im Hinblick auf das System wird die genannte Aufgabe durch ein System mit den Merkmalen des Anspruchs 11 gelöst. Vorteilhafte Ausführungsformen sind Gegenstand der Unteransprüche.

Das erfindungsgemäße Verfahren zur Trennung von, bevorzugt faserhaltigen, staubhaltigen Materialien aus der Verwertung von Elektro- oder Elektronikgeräten sieht dabei zumindest einen Verfahrensschritt zum mechanischen und trockenen Lösen von Partikeln aus faserhaltigen, Mischmaterialagglomeraten und zumindest einen Verfahrensschritt zum mechanischen und trockenen Auflösen von faserhaltigen Mischmaterialagglomeraten vor.

Die Grundidee der vorliegenden Erfindung basiert auf der Erkenntnis, dass in den staubhaltigen Materialgemischen oder in den Stäuben eine nicht unerhebliche Anzahl von insbesondere faserhaltigen Mischmaterialagglomeraten vorliegen, die ihrerseits Partikel oder Körner, die grundsätzlich für eine Weiterverarbeitung oder einer Wiederverwendung geeignet wären einschließen oder binden, zumindest aber die Siebbarkeit und damit die Trennbarkeit der entsprechenden Materialpartikel verhindern.

Darauf aufbauend ist es der Grundgedanke der vorliegenden Erfindung durch die genannten Verfahrensschritte möglichst viele derart gebundene oder nicht siebbare und/oder nicht rieselfähige Partikel aus den Mischmaterialagglomeraten zu befreien oder zu entfernen, wozu dabei einerseits ein Lösen der Partikel aus bestehenden Agglomeraten sowie auch das Auflösen der entsprechenden Agglomerate an sich vorgesehen ist. Durch diese erfindungsgemäße Kombination an Verfahrensschritten kann in überraschender Weise ein derart großes Maß an rieselfähigen und potential wiederverwertbaren Partikeln aus den Mischmaterialagglomeraten entfernt werden, die dann eine Trennung oder Fraktionierung der Partikel ermöglichen, die eine oder mehrere Trennfraktionen mit einer entsprechend erhöhten Konzentration an wiederverwertbaren Materialien, insbesondere Metallen oder Edelmetallen aufweisen, dass dadurch einerseits eine wirtschaftliche Aufbereitung oder Wiederverwertung möglich wird und andererseits der nicht aufbereitbare oder nicht wiederverwertbare Anteil des Ausgangsmaterials reduziert wird.

Die faserhaltigen Mischmaterialagglomerate bilden sich in der Form von Knäuel oder "Wollmäusen" insbesondere durch die Fasern, beispielsweise Glasfasern, die in großer Stückzahl in modernen Elektro- oder Elektronikgeräten in der Form von glasfaserverstärkten Kunststoffen, bevorzugt Leiterplatten oder vergleichbaren Bauteilen, zum Einsatz kommen. Diese im Staub enthaltenen losen Faserverbund-Strukturen können - analog zu Hausstaub "Wollmäusen" - andere Partikel und Körner binden, einschlie-ßen oder verknäueln. Dies bedeutet auch, dass der Verfahrensschritt des mechanischen und trockenen Auflösens von faserhaltigen Mischmaterialagglomeraten primär die Vereinzelung von Fasern untereinander erreicht.

Dies bedeutet, dass der Verfahrensschritt eine Diffusion der Mischmaterialagglomerate bewirkt.

Eine besondere Leistung des erfindungsgemäßen Verfahrens liegt in der Realisierung der erfindungsgemäßen Verfahrensschritte als trockene Verfahrensschritte, die gerade keinen Zusatz eines flüssigen Lösungs- oder Transportmittels benötigen. Denn neben dem zusätzlichen Energieaufwand zum anschließenden Trocknen der Materialfraktionen oder der großen Masse, die dann entsorgt werden muss oder der Trennfraktionen, bedürfen entsprechend nasse Verfahren oder Verfahrensschritte auch der teilweise aufwendigen Aufbereitung des flüssigen Mediums oder Lösungs- oder Transportmittels, sodass eine wirtschaftliche Trennung in Nassverfahren vermutlich nur für Materialzusammensetzungen mit hoher Metallkonzentration zu erwarten ist. Zudem wird durch das Nassverfahren ein erhöhter Verlust an werthaltigen Edelmetallen in Kauf genommen.

Jedem Trennprozess geht eine Fraktionierung in verschiedene Korngrößen voraus. Dies setzt jedoch voraus, dass die Materialien siebfähig oder rieselfähig sind. Genau dies trifft jedoch auf die oben genannten unbehandelten Stäube aus der Verwertung von Elektro- oder Elektronikgeräten noch nicht zu.

Dies ist im Wesentlichen der Knäuelbildung oder Verknäuelung geschuldet, die ein Art Materialmatrix oder Materialgerüst bereitstellt, in die andere Partikel und Körner eingelagert werden oder eingelagert werden können und somit nicht mehr sieb- oder rieselfähig sind. Das Resultat ist die Ausbildung von Mischmaterialagglomeraten. Folglich ist es gerade nicht ausreichend für die Realisierung der Erfindung einzelne Fasern abzuseparieren oder zurückzuhalten. Vielmehr muss eine Verbesserung der Sieb- und/oder Rieselfähigkeit mit einer Auflösung, Vereinzelung Zerteilung und/oder Auflockerung von Knäuelanteilen des Mischmaterialagglomerats einhergehen, so dass Partikel aus diesen freigesetzt oder gelöst werden können.

Dementsprechend ist die Ausgestaltung des Verfahrensschritts zum mechanischen und trockenen Auflösen von faserhaltigen Mischmaterialagglomeraten gerade so gewählt, dass ein Auflösung, Vereinzelung, Zerteilen Diffusion und/oder Auflockern von Knäuelanteilen des Mischmaterialagglomerats erreicht wird.

Die Knäuele oder Mischmaterialagglomerate lediglich in einen Virbationszustand zu versetzten oder anzuregen reicht dabei in der Regel nicht aus, da die Knäuele Ihrerseits keine statischen oder starren Gebilde sind und ohne merkliche Auflösung durch elastische Verformung oder Eigenschwingung auf die äußere Anregung reagieren.

Im Rahmen des erfindungsgemäßen Verfahrens wird also ermöglicht, dass ein Großteil der bisher nicht für eine Trennung zur Verfügung stehende Anteil an in den faserhaltigen Mischmaterialagglomeraten gebundenen Partikel der Trennung überhaupt zugänglich gemacht werden oder für die Trennung "aufgeschlossen" werden. Damit kann eine zusätzliche und/oder parallele Trennung des Ausgangsmaterials, also des Staubs oder der staubhaltigen Materialgemische in der Form effektiviert werden, dass insgesamt ein höherer Anteil des Materials in eine rieselförmige Form oder einen rieselförmigen Zustand überführt wird und dadurch in entsprechenden trockenen Trennverfahren getrennt und ggf. weiterverwertet oder aufbereitet werden kann.

Gemäß einer ersten vorteilhaften Ausführungsform des Verfahrens kann beispielsweise vorgesehen sein, dass der Verfahrensschritt des Lösens der Partikel aus faserhaltigen Mischmaterialagglomeraten als ein erster Verfahrensschritt durchgeführt wird. Dadurch können in den faserhaltigen Mischmaterialagglomeraten weniger stark gebundene oder weniger stark eingebettete Partikel bereits gelöst und/oder abgetrennt werden. Dies hat wiederum den Vorteil, dass in anderen Verfahrensschritten, sowohl im erfindungsgemäßen Verfahrensschritt der mechanischen Auflösung von Mischmaterialagglomeraten als auch in nachfolgenden Trenn-Verfahrensschritten oder Fraktionierungs-Verfahrensschritten ein geringerer Materialdurchsatz erreicht werden muss.

Es kann ebenfalls vorteilhaft vorgesehen sein, dass im Verfahrensschritt des Lösens von Partikeln aus den Mischmaterialagglomeraten auch gleichzeitig eine Fraktionierung nach Partikelgrößen, bevorzugt von drei bis acht Fraktionen, vorgenommen wird. Dies hat den Vorteil, dass neben dem Lösen der Partikel aus den Mischmaterialagglomeraten auch gleichzeitig eine Fraktionierung, insbesondere eine Vor- oder Erstfraktionierung des Eingangsmaterials durchgeführt wird, also dass dann eine Weiterverarbeitung oder Weiterbehandlung selektiv für die so erzeugten Fraktionen durchgeführt werden kann. Bevorzugt kann dazu eine gemeinsame oder einheitliche Systemvorrichtung verwendet werden, die sowohl eine Fraktionierung als auch ein Lösen von Partikeln aus Mischmaterialagglomeraten ermöglicht.

Die Edelmetalle finden sich bevorzugt in Fraktionen mit einer Korngröße von <300µm. Die Schwermetalle finden sich bevorzugt in Fraktionen mit Korngrößen zwischen 300µm und 1000µm, Die gröberen werthaltigen Partikel sind in der Regel leicht zerkleinerbar und würden im Fall einer zu starken Zerkleinerung die Anteile der nicht mit Edelmetall behafteten Partikel erhöhen und somit letztendlich die Verwertungskosten erhöhen. Daher ist es vorteilhaft eine Fraktion von <300µm sowie frei liegende Partikel zunächst zu separieren, wodurch auch eine zusätzliche Aufkonzentration der werthaltigen Partikel erfolgt. Dabei kann besonders vorteilhaft vorgesehen sein, dass eine Fraktion mit bis zu 100pm, bevorzugt von bis zu 50µm direkt für eine Verhüttung abgetrennt wird, da in dieser Fraktion eine überdurchschnittliche Konzentration an werthaltigen Partikeln gegeben ist. Dies kann beispielsweise mittels eines Taumelsiebes erfolgen. Lediglich die in größeren Gebilden oder Agglomeraten eingeschlossenen kleinen/feinen Partikel sollen durch die Vereinzelungsvorrichtung schonend freigelegt werden und anschließend siebbar sein. Die Vereinzelungsvorrichtung oder Zerkleinerungsvorrichtung wird nachfolgend auch "Flowability-Box" genannt werden. Darunter sollen verstanden werden, dass es unterschiedliche Ansätze und Mechanismen gibt, die die Vereinzelungsleistung erbringen können.

Beispielsweise kann vorgesehen sein, dass der zunächst durchgeführte Verfahrensschritt des Lösens der Partikel aus Mischmaterialagglomeraten durch eine Behandlung des Staubs in einem Taumelsieb mit beispielsweise sechs verschiedenen Siebfraktionen durchgeführt wird. Dabei kann, insbesondere durch Vibration ein Lösen der Partikel aus den Mischmaterialagglomeraten erreicht werden. Daher kann es auch vorteilhaft sein die derartige Behandlung oder die Durchführung des entsprechenden Verfahrensschritts möglichst lange zu betreiben, da durch eine zunehmend lange Einwirkzeit der Vibration auch entsprechend viele Partikel oder ein entsprechend großer Anteil der Partikel aus den Mischmaterialagglomeraten gelöst wird. Wie oben bereits beschrieben, wird beispielsweise durch eine entsprechende Durchführung des Verfahrensschritts zum mechanischen oder trockenen Lösen von Partikeln im Rahmen eines Siebens mit einem Taumelsieb nicht nur das Lösen der Partikel aus den Mischmaterialagglomeraten bewirkt, sondern vorteilhaft gleichzeitig auch noch eine Fraktionierung, beispielsweise eine Erstfraktionierung in Fraktionen mit unterschiedlichen Partikelgrößen erreicht wird. Diese Fraktionen können selektiv weiterverarbeitet werden. Für Siebfraktionen, die beispielsweise eine Partikelgröße - zumindest in eine Dimension oder Raumrichtung - von weniger als 100pm, bevorzugt weniger als 50µm aufweisen, kann beispielsweise eine direkte Abseparierung oder Aussortierung zu einer Endfraktion oder Aufbereitungsfraktion vorgenommen werden, da das entsprechend feine oder feinkörnige Material verhältnismäßig viele wiederverwertbare Anteile, insbesondere Edelmetallanteile aufweist.

Für eine mittelgrobe Fraktion, beispielsweise eine Fraktion mit Partikeln in der Größenordnung zwischen 100µm und 300µm, bevorzugt zwischen 50µm und 300µm, kann beispielsweise ein weiteres mechanisches und trockenes Trennverfahren angewendet werden, um Fraktionen mit potentiell mehr wiederverwertbaren oder aufbereitbaren Bestandteilkonzentrationen zu erzeugen oder zu erreichen.

Gemäß einer weiteren, besonders bevorzugten Ausführungsform des Verfahrens kann zudem vorgesehen sein, dass im Verfahrensschritt des Auflösens von Mischartikelagglomeraten auch gleichzeitig eine Fraktionierung nach Partikelgrößen, bevorzugt von zwei bis drei Fraktionen, vorgenommen wird. Dadurch kann der besagte Verfahrensschritt ebenfalls in besonders vorteilhafter Weise nicht nur die Grundvoraussetzung für ein weiteres Lösen von Partikeln, insbesondere recyclingfähigen oder wiederverwertbaren Partikeln aus den Mischmaterialagglomeraten bereitstellen, sondern gleichzeitig auch noch eine Trennung oder Fraktionierung bewirken, die zumindest teilweise bereits zu einer Abseparierung der befreiten, freigelegten oder ansonsten aus den Mischmaterialagglomeraten gelösten Partikeln bewirkt. Besonders vorteilhaft ist die Tatsache, dass durch das Auflösen der faserhaltigen Mischmaterialagglomerate eine Vielzahl von ansonsten unzugänglichen oder gebundenen Partikeln in einen rieselfähigen und damit weiterverarbeitbaren, insbesondere trennbaren, Zustand übergehen.

Besonders vorteilhaft kann vorgesehen sein, dass im Verfahrensschritt des Auflösens von Mischmaterialagglomeraten eine die Haftwirkung von Fasern untereinander reduzierende Einwirkung, insbesondere eine Oberflächenbeeinflussung der Fasern und/oder eine Verkürzung der Fasern und/oder eine räumliche Vereinzelung der Fasern, bevorzugt von einem vorfraktionierten Anteil des Materialgemischs oder Staubs, durchgeführt wird. Es hat sich in diesem Zusammenhang als besonders effektiv im Zusammenhang mit der Auflösung der Mischmaterialagglomeraten erwiesen, die Oberflächen der Fasern zu beeinflussen, insbesondere die Oberflächen der Fasern zu glätten, die Fasern an sich zu kürzen sowie die Fasern räumlich voneinander zu trennen. Durch all diese Einwirkungen, sowohl einzeln, als auch in Kombination miteinander, kann insgesamt eine effektive Auflösung der Mischmaterialagglomerate erreicht werden, sodass in den Mischmaterialagglomeraten eingeschlossene oder gebundene Partikel freigesetzt werden oder freisetzbar werden.

In diesem Zusammenhang kann es besonders vorteilhaft sein, wenn im Verfahrensschritt des Auflösens ein Zerkleinerungs- und/oder Mahl- und/oder Schleifprozess, bevorzugt von einem vorfraktionierten Anteil des Materialgemischs, durchgeführt wird. Verschiedene, an sich bekannte Zerkleinerungs- und/oder Mahlprozesse und/oder Schleifprozesse können zum Einsatz kommen. Grundvoraussetzung hierbei ist wie eingangs bereits ausgeführt, jedoch dass der besagte Prozess trocken, also ohne Zugabe von einer Flüssigkeit in Form eines Lösungs- oder Transportmittels durchgeführt werden kann. Verschiedene Prozesse oder Anordnungen haben sich dabei als besonders vorteilhaft erwiesen. Einerseits kann eine wirkungsvolle Auflösung von Mischmaterialagglomeraten durch eine Behandlung in einer Stabrohrmühleneinrichtung erreicht werden. Die Stabrohrmühleneinrichtung hat sowohl eine die Oberflächeneigenschaften der Fasern beeinträchtigende, insbesondere glättende Wirkung, als auch eine die Fasern voneinander räumlich vereinzelte Wirkung auf die Mischmaterialagglomerate. Ebenfalls eine besonders vorteilhafte Verfahrensführung kann durch eine modifizierte, insbesondere für einen trockenen Betrieb angepasste Gleitschleifeinrichtung realisiert werden. Derartige Gleitschleifeinrichtungen sind auch als Rundvibrator oder Rundschleifer bekannt, die jedoch in aller Regel nass, also mit einem flüssigen, bevorzugt wässrigem Zusatzmittel betrieben werden. Dabei können Schleifkörper aus unterschiedlichen, bevorzugt mineralischen, Materialien und mit unterschiedlichen Formen oder Oberflächen zum Einsatz kommen.

Gemäß einer weiteren vorteilhaften Ausführungsform des Verfahrens kann vorgesehen sein, dass zumindest ein weiterer Separations- und/oder Fraktionierschritt, bevorzugt drei weitere Separations- und/oder Fraktionierschritte durchgeführt werden, wobei bevorzugt in wenigstens einem Separations- und/oder Fraktionierschritt das vom Verfahrensschritt des Auflösens der Mischmaterialagglomerate erzeugte Materialgemisch, insbesondere eine im Rahmen des besagten Verfahrensschritts erzeugte Materialfraktion, als Materialeingang zugeführt wird. Als Separationsschritt kann dabei ein Verfahren zu Trennung nach spezifischem Gewicht, beispielsweise ein Verfahren zum Trennen in eine Schwerfraktion und eine Leichtfraktion verstanden werden. Als Fraktionierschritt kann ein Verfahren zur Trennung nach Korngrößen verstanden werden. Gegebenenfalls kann dieses Material oder diese Materialfraktion als Materialeingang mit einer weiteren Materialfraktion, beispielsweise aus dem erfindungsgemäßen Verfahrensschritt des mechanischen und trockenen Lösens von Partikeln aus den faserhaltigen Mischmaterialagglomeraten verbunden, kombiniert oder vermischt werden. Die weiteren Separations- und/oder Fraktionierschritte werden ihrerseits ebenfalls trocken, also ohne flüssiges Lösungs- oder Transportmittel durchgeführt, um somit insgesamt das Verfahren trocken zu halten oder durchzuführen. Beispielsweise können die weiteren Separations- und/oder Fraktionierschritte durch Lufttrenntische und/oder durch Taumelsiebeinrichtungen durchgeführt werden.

Gemäß einer weiteren, besonders bevorzugten Ausgestaltung des Verfahrens kann vorgesehen sein, dass durch die Separations- und/oder Fraktionierschritte und die dabei entstehenden Fraktionen ein verästelter Materialfluss entsteht oder erzeugt wird, bei dem zumindest an einem Punkt ein Zusammenführen von zwei oder mehr Fraktionen aus unterschiedlichen Separations- und/oder Fraktionierschritten, insbesondere aus unterschiedlichen Separations- und/oder Fraktioniereinrichtungen, erfolgt. Dadurch kann der Materialfluss insgesamt und die Aufkonzentrierung von wiederverwertbaren Materialien, insbesondere Edelmetallen, besonders effektiv gestaltet werden. Außerdem kann dadurch in besonders effektiver Weise auch eine Absonderung oder Aussortierung von Materialkomponenten oder Fraktionen erfolgen, deren Zusammensetzung keine Aufbereitung oder Wiederverwertung rechtfertigen und die dementsprechend deponiert oder thermisch verwertet werden.

In einer weiteren, bevorzugten Ausführungsform des Verfahrens kann vorgesehen sein, dass in dem Verfahren erzeugte Fraktionen, insbesondere in dem Verfahren erzeugte Fraktionen mit Partikelgrößen von weniger als 100µm, bevorzugt weniger als 50µm, einer Verhüttung oder einer Scheideanstalt zugeführt werden, um insbesondere die Rückgewinnung von Metallen und Edelmetallen zu betreiben.

Die oben genannte Aufgabe wird im Hinblick auf ein System zur Separation von staubhaltigen, insbesondere glasfaserhaltigen, Schwermetall (SM) und/oder Edelmetall (EM) aufweisenden, Materialgemischen oder Stäuben aus der Verwertung von Elektro- oder Elektronikgeräten dadurch gelöst, dass eine Lösevorrichtung zum mechanischen und trockenen Lösen von Partikel aus faserhaltigen, bevorzugt glasfaserhaltigen, Mischmaterialagglomeraten und zumindest eine Vereinzelungsvorrichtung zum mechanischen und trockenen Auflösen von faserhaltigen, bevorzugt glasfaserhaltigen, Mischmaterialagglomeraten vorgesehen ist.

Die Vorrichtungen können grundsätzlich räumlich voneinander getrennt angeordnet oder ausgebildet sein. Alternativ kann aber auch eine integrierte Ausführung des Systems vorgesehen sein, bei dem die Vorrichtungen miteinander verbunden oder ineinander integriert sind. Auch kann, ein direkter Materialfluss oder direkter Materialtransport zwischen den erfindungsgemäßen Vorrichtungen des Systems und weiteren, bevorzugt vorzusehenden Vorrichtungen des Systems ausgebildet sein. Gleichermaßen ist es jedoch auch möglich, dass einzelne Anteile, insbesondere einzelne Fraktionen des staubhaltigen Materialgemischs oder Staubs als Eingangsmaterial für die Verwendung in einer der Vorrichtungen in geeigneten Behältern gelagert und/oder zwischengelagert werden, bis sie in dem erfindungsgemäßen System an geeigneter Stelle, also durch die geeignete Vorrichtung, weiterverwertet, weiter aufbereitet oder aus dem System entnommen werden. Die Kombination einer Lösevorrichtung und einer Vereinzelungsvorrichtung von faserhaltigen, bevorzugt glasfaserhaltigen, Mischmaterialagglomeraten in einem System zur Trennung von staubhaltigen, insbesondere glasfaserhaltigen, Materialgemischen oder Stäuben aus der Verwertung von Elektro- oder Elektronikgeräten hat, wie oben bereits beschrieben, den überraschenden Effekt, dass dadurch ein deutlich größerer Anteil an wiederverwertbaren Materialien, insbesondere Edelmetallen, in einen rieselfähigen Zustand und damit in einen an sich grundsätzlich fraktionierbaren oder trennbaren Zustand überführt wird, sodass die in großen Mengen oder in großen Volumen anfallenden Stäube oder staubhaltigen Materialgemische aus der Verwertung, insbesondere aus der mechanischen Verwertung von Elektro- oder Elektronikgeräten deutlich besser getrennt werden können und damit eine deutlich bessere Aufkonzentrierung von recyclingfähigen Komponenten oder Bestandteilen der Stäube erreicht wird, was wiederum dazu führt, dass die besagten Stäube überhaupt wirtschaftlich einem Wiederverarbeitungs- oder Recyclingprozess unterzogen werden können.

Erfindungsgemäß ist dabei vorgesehen, dass sowohl die Vereinzelungsvorrichtung als auch die Lösevorrichtung als Vorrichtungen ausgebildet sind, die trocken, also ohne Zusatz oder Zugabe einer Transportflüssigkeit oder einer Trennflüssigkeit betrieben werden.

Insgesamt wird zur Vermeidung von Wiederholungen im Hinblick auf die Merkmale und Vorteile des erfindungsgemäßen Systems auch auf die vorangehende Beschreibung des erfindungsgemäßen Verfahrens verwiesen. Dabei sollen in Bezug auf das Verfahren offenbarte Merkmale auch als in Bezug auf das erfindungsgemäße System offenbart gelten, und umgekehrt.

Gemäß einer ersten vorteilhaften Ausführungsform des Systems kann vorgesehen sein, dass die Lösevorrichtung zum Lösen der Partikel als eine Eingangsvorrichtung des Systems vorgesehen und/oder angeordnet ist. Dies bedeutet, dass der aus der Verwertung von Elektro- und Elektronikgeräten stammende Staub oder das staubhaltige Materialgemisch, wie eingangs definiert, zunächst der Lösevorrichtung zugeführt wird, in der zumindest ein Teil der in den faserhaltigen, Mischmaterialagglomeraten gebundenen Partikel mechanisch gelöst und somit in einen rieselfähigen, fraktionierbaren Zustand überführt werden.

Weiterhin kann vorteilhaft vorgesehen sein, dass die Lösevorrichtung gleichzeitig Mittel zum Fraktionieren des Materialgemischs nach Partikelgrößen, bevorzugt von drei bis acht Fraktionen aufweist. Dadurch kann neben der, soweit möglichen, Auslösung oder Entbindung von Partikeln aus den faserhaltigen Mischmaterialagglomeraten auch bereits eine Trennung oder Fraktionierung sowohl der an sich lose oder ungebunden vorliegenden Partikel als auch mechanisch gelösten, aus den Mischmaterialagglomerationen befreiten oder entfernten Partikeln durchgeführt werden und im Anschluss daran in effektiver Weise die jeweiligen Fraktionen weiterverarbeitet oder weiterverwendet werden.

Besonders bevorzugt kann die Lösevorrichtung als Taumelsieb ausgebildet sein. Die in einem Taumelsieb zum Einsatz kommenden Siebe können entsprechend unterschiedliche Maschenweiten aufweisen und können entsprechende Reinigungsmechanismen vorsehen. Für gröbere Siebe kann dabei eine Ballkopfreinigung zum Einsatz kommen. Feinere Siebe können ggf. mit einer Ultraschallreinigung gereinigt oder betrieben werden.

Weiterhin kann vorgesehen sein, dass die Vereinzelungsvorrichtung oder Flowability-Box gleichzeitig Mittel zum Fraktionieren des Materialgemischs, bevorzugt von zwei bis drei Fraktionen, umfasst. Auch dadurch wird sichergestellt, dass nicht nur ein Auflösen der faserhaltigen Mischmaterialagglomerate vorgenommen wird, sondern dass gleichzeitig auch die so gelösten oder aus den Mischmaterialagglomeraten befreiten, in einem rieselfähigen Zustand befindlichen Partikel bereits in entsprechende Fraktionen unterteilt werden, die die Weiterverarbeitung erleichtern oder verbessern.

Besonders vorteilhaft kann vorgesehen sein, dass die Vereinzelungsvorrichtung Mittel umfasst, die das Auflösen einer Haftwirkung von Fasern untereinander bewirken, insbesondere eine Oberflächenbeeinflussung der Fasern und/oder eine Verkürzung der Fasern und/oder eine räumliche Vereinzelung der Fasern bewirken, bevorzugt von einem vorfraktionierten Anteil des Materialgemischs. Durch die Herabsetzung der Haftwirkung der Fasern untereinander wird besonders effektiv die Auflösung der faserhaltigen Mischmaterialagglomerate bewirkt.

Besonders bevorzugt kann vorgesehen sein, dass die Vereinzelungsvorrichtung Mittel zum Mahlen und/oder Schleifen des Materials oder des Staubs, bevorzugt eines vorfraktionierten Anteils des Materialgemischs, aufweist.

Besonders bevorzugt kann vorgesehen sein, dass die Vereinzelungsvorrichtung als für den trockenen Betrieb modifizierte Gleitschleifeinrichtung und/oder als Stabrohrmühleneinrichtung ausgebildet ist. Die genannten Einrichtungen haben sich als besonders effektiv im Hinblick auf die Auflösung von faserhaltigen, insbesondere glasfaserhaltigen Mischmaterialagglomeraten erwiesen. Scheinbar sind sowohl Gleitschleifeinrichtungen als auch Stabrohrmühleneinrichtungen besonders gut in der Lage die Oberflächen der Fasern, insbesondere der Glasfasern effektiv zu glätten, die Fasern zu kürzen und/oder die Fasern untereinander oder gegeneinander zu vereinzeln, was jeweils für sich genommen aber gerade auch in Kombination zu einer effektiven Auflösung der faserhaltigen, insbesondere glasfaserhaltigen Mischmaterialagglomerate führt. Die besagte Gleitschleifeinrichtung, der Rundschleifer und Rundvibrator kann dabei z.B. mit sternförmigen Schleifkörpern in der Größenordnung von 5 mm bis 15 mm pro Raumrichtung betrieben werden. Es kann vorgesehen sein, dass eine Absaugung, insbesondere eine Absaugeinrichtung vorgesehen ist, die kleinste Partikel entfernt und/oder absepariert.

Es kann weiterhin vorteilhaft vorgesehen sein, dass zumindest eine weitere Separations- und/oder Fraktioniervorrichtung, bevorzugt drei weitere Separations- und/oder Fraktioniervorrichtungen vom System umfasst sind, wobei bevorzugt in wenigstens einer Separations- und/oder Fraktioniervorrichtung das von einer Vereinzelungsvorrichtung erzeugte Materialgemisch, insbesondere eine von der Vereinzelungsvorrichtung erzeugte Materialfraktion, als Materialeingang zugeführt wird. Dies ermöglicht in besonders vorteilhafter Weise, dass die in der Vereinzelungsvorrichtung erzeugten Materialgemische, insbesondere Fraktionen, in dem dementsprechend faserhaltige, insbesondere glasfaserhaltige, Mischmaterialagglomerate zerlegt oder aufgelöst wurden und damit entsprechende Partikel oder Materialgemische freigesetzt oder freigegeben haben ihrerseits erneut oder abermals einer Separation und/oder Fraktionierung zugeführt werden, sodass eine effektive Aufkonzentrierung von recyclingfähigen oder aufbereitbaren Materialien oder Materialfraktionen gewährleistet wird.

Ebenfalls vorteilhaft vorgesehen sein kann, dass die weiteren Separations- und/oder Fraktioniervorrichtungen als Luftrenneinrichtungen, bevorzugt als Lufttrenntische, und/oder als Taumelsieb ausgebildet sind. Es hat sich gezeigt, dass diese Vorrichtungen besonders gut und effektiv in das erfindungsgemäße System integrierbar sind und insgesamt zu einer effektiven Aufkonzentrierung von potentiell wiederverwertbaren Materialgemischen führen. Dabei ist ein besonderer Vorteil von Lufttrenntischen, dass diese das eingebrachte Material anhand unterschiedlicher spezifischer Dichten in zumindest eine Leichtfraktion und eine Schwerfraktion trennt. Diese Trennung kann die korngrößenabhängige Fraktionierung in anderen Schritten des erfindungsgemäßen Verfahren besonders gut ergänzen, da dadurch ein Aufkonzentration von Partikeln mit hoher spezifischer Dichte, wie sie beispielsweise bei Edel- oder Schwermetallen vorliegt, ermöglicht wird.

Vorteile und Ausführungsformen der vorliegenden Erfindung werden nachfolgend mit Bezug auf die schematische Zeichnung beschrieben. Darin zeigt:

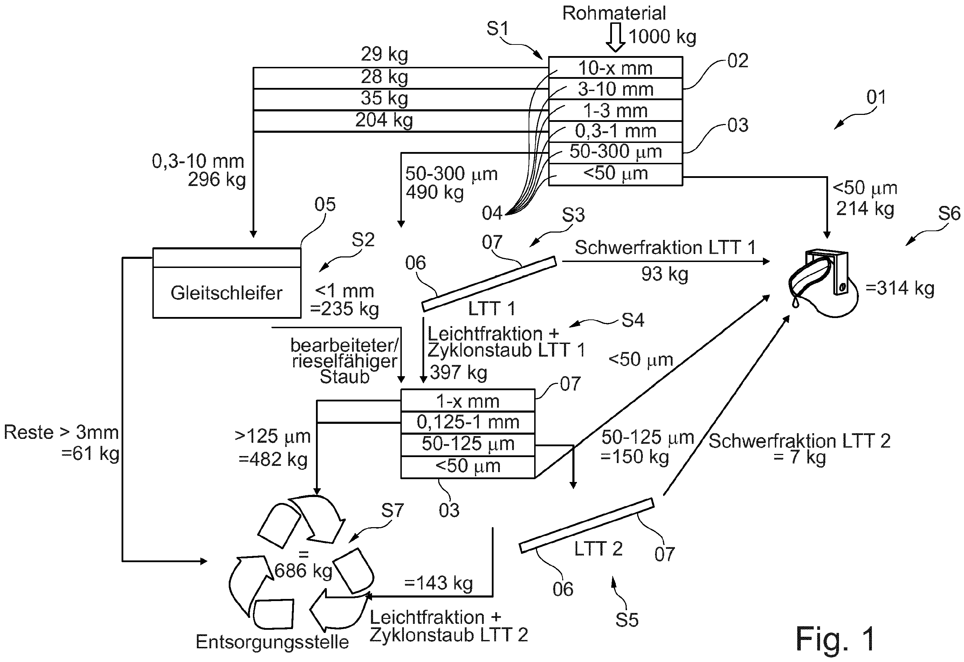

- Fig. 1:: eine schematische Darstellung eines erfindungsgemäßen Systems samt schematischer Darstellung einer Verfahrensführung eines erfindungsgemäßen Verfahrens.

Fig. 1 zeigt ein erfindungsgemäßes System 01 zum Trennen von bevorzugt faserhaltigen, insbesondere glasfaserhaltigen, staubhaltigen Materialgemischen aus der Verwertung von Elektro- oder Elektronikgeräten. Das System 01 umfasst als eine Eingangsvorrichtung 02 eine Lösevorrichtung 03, die in einem ersten Verfahrensschritt S1 einerseits aufgrund von einer trockenen mechanischen Behandlung bereits Partikel aus faserhaltigen Mischmaterialagglomeraten löst und gleichzeitig eine Fraktionierung in unterschiedliche Größenfraktionen 04 erzielt.

Die so erzeugten Größenfraktionen 04 können entsprechend selektiv in den Verfahrensschritten S2 und S3 weiterverwendet werden. Die Lösevorrichtung 03 kann beispielsweise als Taumelsieb ausgestaltet sein. In dem Taumelsieb wird insbesondere durch eine Einwirkung von mechanischen Vibrationen auf die faserhaltigen Mischmaterialagglomerate ein Lösen von Partikeln aus den Mischmaterialagglomeraten bewirkt. Die in der Lösevorrichtung 03 erzeugten feinsten oder feinkörnigsten Fraktionen werden einerseits bereits unmittelbar für eine abschließende Verhüttung absepariert oder einer weiteren Fraktioniervorrichtung 07 zugeführt, die ihrerseits eine abermalige Fraktionierung bewirkt. Beispielsweise kann die Fraktioniervorrichtung 07 als Lufttrenntisch 06 ausgestaltet sein, bei dem im Verfahrensschritt S3 eine Leichtfraktion und eine Schwerfraktion erzeugt wird und zudem durch ein entsprechendes Absaugen eine Fraktion mit in einem Filter gesammeltem Zyklonstaub abgetrennt wird.

Die weiteren, in der als Eingangsvorrichtung 02 ausgebildeten Lösevorrichtung 03 erzeugten Fraktionen können zusammen oder nacheinander einer Vereinzelungsvorrichtung 05 zugeführt werden, wobei die Vereinzelungsvorrichtung 05 dazu eingerichtet ist im Verfahrensschritt S2 die Haftwirkung von Fasern, insbesondere Glasfasern, untereinander zu reduzieren, insbesondere indem eine Oberflächenbeeinflussung, besonders bevorzugt eine Oberflächenglättung, der Fasern, eine Verkürzung der Fasern und/oder eine räumliche Vereinzelung der Fasern untereinander erreicht wird. Die Vereinzelungsvorrichtung 05 kann bevorzugt als trocken betriebene Gleitschleifeinrichtung oder Stabrohrmühleneinrichtung ausgebildet sein.

Die Vereinzelungsvorrichtung 05 kann ihrerseits zudem und ebenfalls im Verfahrensschritt S2 eine Fraktionierung von unterschiedlichen Größenfraktionen 04 bewirken. Beispielsweise kann auch die Vereinzelungsvorrichtung 05 Absaugmittel zum Absaugen feinster Staubpartikel sowie weitere Sieb- oder Trenneinrichtungen aufweisen. In der Vereinzelungsvorrichtung 05 werden ein Großteil der faserhaltigen Mischmaterialagglomerate aufgelöst oder zumindest verkleinert, sodass erhebliche Mengen von ansonsten in den Mischmaterialagglomeraten gebundenen oder eingebetteten Partikeln freigegeben und in einen rieselfähigen Zustand und damit insgesamt in einen trennbaren oder fraktionierbaren Zustand überführt werden. Eine der in der Vereinzelungseinrichtung 05 erzeugten Fraktionen, die besonders viele rieselfähige Partikel umfasst, kann, beispielsweise zusammen mit Fraktionen aus der Fraktioniervorrichtung 07 des Verfahrensschritts S3 einer weiteren Fraktioniervorrichtung 07 zugeführt werden, die ihrerseits als Taumelsieb 03 ausgebildet sein kann und im Verfahrensschritt S4 eine weitere Fraktionierung bewirkt. Auch die in dieser Fraktioniervorrichtung 07 gewonnenen Fraktionen können selektiv weiterverarbeitet werden. Ein Teil kann unmittelbar für eine Verhüttung oder eine Verarbeitung in einer Scheideanstalt im Verfahrensschritt S6 absepariert werden, weitere Fraktionen können unmittelbar der thermischen Entsorgung oder Deponierung im Verfahrensschritt S7 zugeführt werden. Eine weitere Fraktion kann über eine weitere Fraktioniervorrichtung 07, beispielsweise eine weitere Lufttrenneinrichtung 06 im Verfahrensschritt S5 abermals aufgetrennt oder fraktioniert werden, wobei diese Fraktionen dann ihrerseits entweder der Entsorgung S7 oder der Verhüttung S6 zugeführt werden.

Aus Versuchen ist mit dem erfindungsgemäßen Verfahren ist bekannt, dass 90% bis 95% der Metallwertigkeit in weniger als 30% der Masse des Eingangsgemisches aufkonzentriert werden kann. Da dieser Anteil oder dieses Konzentrat hüttentechnisch verwertet wird, verbleibt nur noch etwa 70% der Masse des Eingangsgemisches für die Deponierung.

In einem weitern Verfahrensschritt des erfindungsgemäßen Verfahrens wird der Anteil der zu deponierenden Masse weiter reduziert. Da es sich dabei um ein feinkörniges heizwertreiches Material handelt, bietet sich eine Verwertung als Ersatzbrennstoff an.

Es ist bekannt, dass Rückstände aus Pulverlacken ebenfalls heizwertreich sind und auch als Staub unter hohen Kosten entsorgt werden müssen. Die Pulverlacke umfassen zum Beispiel Polyesterharze, die beim Verpressen mittels Matrizen zu fließen beginnen und sich somit zu einer Kunststoffmasse verflüssigen. Bei einer Bildung einer geeigneten Mischung aus Stäuben aus der Elektro- oder Elektronikgeräteverwertung, beispielsweise Partikeln mit einer Körngröße von weniger als 3mm, und bevorzugt mehr als 0,1 mm, und der Pulverlackverwertung können somit Ersatzbrennstoffe, beispielsweise als Pellets, einfach durch Verpressen erzeugt werden.

### Bezugszeichenliste

- 01: System
- 02: Eingangsvorrichtung
- 03: Lösevorrichtung
- 04: Größenfraktion
- 05: Vereinzelungsvorrichtung
- 06: Lufttrenneinrichtung
- 07: Fraktioniervorrichtung

## Patentansprüche

1. Verfahren zur Separation von faserhaltigen, bevorzugt glasfaserhaltigen, Schwermetall und/oder Edelmetall aufweisenden, staubhaltigen Materialgemischen aus der Verwertung von Elektro- oder Elektronikgeräten, umfassend zumindest einen Verfahrensschritt (S1) zum mechanischen und trockenen Lösen von Partikeln aus faserhaltigen Mischmaterialagglomeraten und zumindest einen Verfahrensschritt (S2) zum mechanischen und trockenen Auflösen von faserhaltigen Mischmaterialagglomeraten.

2. Verfahren nach Anspruch 1,
**dadurch gekennzeichnet,**
**dass** der Verfahrensschritt (S1) des Lösens der Partikel als ein erster Verfahrensschritt durchgeführt wird.

3. Verfahren nach Anspruch 1 oder 2,
**dadurch gekennzeichnet,**
**dass** im Verfahrensschritt (S1) des Lösens von Partikeln auch gleichzeitig eine Fraktionierung nach Partikelgrößen, bevorzugt von 3 bis 8 Fraktionen, vorgenommen wird.

4. Verfahren nach einem der Ansprüche 1 bis 3,
**dadurch gekennzeichnet,**
**dass** im Verfahrensschritt (S2) des Auflösens auch gleichzeitig eine Fraktionierung nach Partikelgrößen, bevorzugt von 2 bis 3 Fraktionen, vorgenommen wird.

5. Verfahren nach einem der Ansprüche 1 bis 4,
**dadurch gekennzeichnet,**
**dass** im Verfahrensschritt (S2) des Auflösens eine die Haftwirkung von Fasern untereinander reduzierende Einwirkung, insbesondere eine Oberflächenbeeinflussung der Fasern, eine Verkürzung der Fasern und/oder eine räumliche Vereinzelung der Fasern, bevorzugt von einem vorfraktionierten Anteil des Materialgemischs, durchgeführt wird.

6. Verfahren nach einem der Ansprüche 1 bis 5,
**dadurch gekennzeichnet,**
**dass** im Verfahrensschritt (S2) des Auflösens ein Mahl- und/oder Schleifprozess, bevorzugt von einem vorfraktionierten Anteil des Materialgemischs, durchgeführt wird.

7. Verfahren nach einem der Ansprüche 1 bis 6,
**gekennzeichnet durch**,
zumindest einen weiteren Separations- und/oder Fraktionierschritt (S3, S4, S5), bevorzugt 3 weitere Separations- und/oder Fraktionierschritte, wobei bevorzugt in wenigstens einem Fraktionierschritt (S3) das vom Verfahrensschritt (S2) des Auflösens erzeugte Materialgemisch, insbesondere eine im Rahmen des Verfahrensschritts (S2) des Auflösens erzeugte Materialfraktion, als Materialeingang zugeführt wird.

8. Verfahren nach einem der Ansprüche 1 bis 7,
**dadurch gekennzeichnet,**
**dass** durch die Separations- und/oder Fraktionierschritte (S3, S4, S5) und die dabei entstehenden Fraktionen ein verästelter Materialfluss entsteht, bei dem zumindest in einem Punkt eine Zusammenführung von zwei oder mehr Fraktionen aus unterschiedlichen Fraktionierschritten, insbesondere aus unterschiedlichen Fraktioniereinrichtungen (04), zusammengeführt werden.

9. Verfahren nach einem der Ansprüche 1 bis 8,
**dadurch gekennzeichnet,**
**dass** in dem Verfahren erzeugte Fraktionen, insbesondere zur Rückgewinnung von Metallen und Edelmetallen, einer Verhüttung oder eine Scheideanstalt (S6) zugeführt werden.

10. Verfahren nach Anspruch 9,
**dadurch gekennzeichnet,**
**dass** in wenigstens zwei, bevorzugt in jedem Fraktionierschritt (S1, S3, S4, S5), der eine Fraktion von Partikeln mit weniger als 50µm Größe in einer Raumrichtung bereitstellt, die entsprechende Fraktion zur Verhüttung oder zur Übertragung an eine Scheideanstalt (S6) aussortiert oder bereitgestellt wird.

11. System zur Separation von faserhaltigen, bevorzugt, glasfaserhaltigen, Schwermetall und/oder Edelmetall aufweisenden, staubhaltigen Materialgemischen aus der Verwertung von Elektro- oder Elektronikgeräten, umfassend zumindest eine Lösevorrichtung (03) zum mechanischen und trockenen Lösen von Partikeln aus faserhaltigen, Mischmaterialagglomeraten und zumindest eine Vereinzelungsvorrichtung (05) zum mechanischen und trockenen Auflösen von faserhaltigen Mischmaterialagglomeraten.

12. System nach Anspruch 11,
**dadurch gekennzeichnet,**
**dass** die Lösevorrichtung (03) zum Lösen der Partikel als eine Eingangsvorrichtung (02) des Systems (01) vorgesehen und/oder angeordnet ist.

13. System nach Anspruch 11 oder 12,
**dadurch gekennzeichnet,**
**dass** die Lösevorrichtung (03) gleichzeitig Mittel zum Fraktionieren des Materialgemischs nach Partikelgrößen, bevorzugt von 3 bis 8 Fraktionen, aufweist.

14. System nach einem der Ansprüche 11 bis 13,
**dadurch gekennzeichnet,**
**dass** die Lösevorrichtung (03) als Taumelsieb ausgebildet ist.

15. System nach einem der Ansprüche 11 bis 14,
**dadurch gekennzeichnet,**
**dass** die Vereinzelungsvorrichtung (05) gleichzeitig Mittel zum Fraktionieren des Materialgemischs, bevorzugt von 2 bis 3 Fraktionen, umfasst.

16. System nach einem der Ansprüche 11 bis 15,
**dadurch gekennzeichnet,**
**dass** die Vereinzelungsvorrichtung (05) Mittel umfasst, die das Auflösen einer Haftwirkung von Fasern untereinander bewirken, insbesondere eine Oberflächenbeeinflussung der Fasern, eine Verkürzung der Fasern und/oder eine räumliche Vereinzelung der Fasern bewirken, bevorzugt von einem vorfraktionierten Anteil des Materialgemischs.

17. System nach einem der Ansprüche 11 bis 16,
**dadurch gekennzeichnet,**
**dass** die Vereinzelungsvorrichtung (05) Mittel zum Mahlen und/oder Schleifen, bevorzugt von einem vorfraktionierten Anteil des Materialgemischs, aufweist.

18. System nach einem der Ansprüche 11 bis 17,
**dadurch gekennzeichnet,**
**dass** die Vereinzelungsvorrichtung (05) als Gleitschleifeinrichtung und/oder als Stabrohrmühleneinrichtung ausgebildet ist.

19. System nach einem der Ansprüche 11 bis 18,
**gekennzeichnet durch**,
zumindest eine weitere Separations- und/oder Fraktioniervorrichtung (07), bevorzugt 3 weitere Separations- und/oder Fraktioniervorrichtungen (07), wobei bevorzugt in wenigstens einer Separations- und/oder Fraktioniervorrichtung (07) das von der Vereinzelungsvorrichtung (05) erzeugte Materialgemisch, insbesondere eine von der Vereinzelungsvorrichtung (05) erzeugte Materialfraktion (04), als Materialeingang zugeführt wird.

20. System nach einem der Ansprüche 11 bis 19,
**dadurch gekennzeichnet,**
**dass** die weiteren Separations- und/oder Fraktioniervorrichtungen (07) als Lufttrenneinrichtungen (06) und/oder als Taumelsieb ausgebildet sind.
